# EUROPÄISCHE PATENTSCHRIFT

(11) **EP 1 570 938 B1**
(45) Veröffentlichungstag und Bekanntmachung des Hinweises auf die Patenterteilung: **10.07.2013**
(21) Anmeldenummer: 05003867.8
(22) Anmeldetag: 23.02.2005
(51) Int. Cl.: B23K 9/18

(54) **Unterpulver-Schweissverfahren**
Submerged arc welding method
Soudage à l'arc submergé

(30) Priorität: 02.03.2004 DE 102004010287
(43) Veröffentlichungstag der Anmeldung: 07.09.2005
(73) Patentinhaber: ThyssenKrupp Marine Systems GmbH, 24143 Kiel (DE)
(72) Erfinder: Hinneberg, Dieter, Dr.-Ing., 24568 Kaltenkirchen (DE); Eisenstein, Bernd, 24109 Kiel (DE); Panoch, Axel, Dipl.-Ing., 24250 Nettelsee (DE)
(74) Vertreter: Vollmann, Heiko

(56) Entgegenhaltungen:
- CH-A- 458 887
- DE-A1- 1 918 953
- DE-A1- 3 011 409
- US-A- 3 752 951

## Beschreibung

Die Erfindung betrifft ein Unterpulver-Schweißverfahren mit den im Oberbegriff des Anspruchs 1 angegebenen Merkmalen, welche aus der DE 1918953 bekannt sind, sowie eine Schweißvorrichtung zum Ausführen dieses Verfahrens, mit der im Oberbegriff des Anspruchs 6 angegebenen Merkmalen, welche ebenfalls der DE 1918953 zu entnehmen wird.

Das Unterpulver-Schweißverfahren ist ein eigenständiges Fügeverfahren, bei dem eine oder mehrere Drahtelektroden unter einer Schicht eines Schweißpulvers abgeschmolzen werden.

Bei diesem Verfahren schmilzt ein zwischen der Drahtelektrode und dem Werkstück ausgebildeter Lichtbogen einen Teil des über der Schweißstelle aufgehäuften Schweißpulvers auf, wobei einige Pulverbestandteile verdampfen. Zusammen mit den Dämpfen der Metallschmelze bilden die verdampften Pulverbestandteile oberhalb der Schweißstelle eine gasgefüllte Kaverne. Diese wird pulverseitig durch eine Schicht Pulverschmelze bzw. Schlacke und dem darüber befindlichen Schweißpulver begrenzt. Die verdampften Pulverbestandteile wirken in der Kaverne als Schutzgas, das das aufgeschmolzene Elektrodenende, die abgelösten Tropfen des Elektrodenwerkstoffs und die Schweißstelle vor Einflüssen aus der Luftatmosphäre schützt.

Ein Nachteil des Unterpulver-Schweißens ist es, dass das Verfahren nur wenige Einflussmöglichkeiten bietet, um das Schweißergebnis zu verbessern oder das Verfahren an bestimmte Schweißaufgaben anzupassen. Verwendete Maßnahmen sind in diesem Zusammenhang in der Regel eine Variation der Schweißparameter wie z. B. der Schweißstromstärke, der Schweißspannung und der Schweißgeschwindigkeit. Ferner die Änderung der Elektrodenpolung und der Stromart sowie der Schweißpulverzusammensetzung, des Drahttyps und des Drahtdurchmessers.

DD 37 867 beschreibt ein Unterpulver-Schweißverfahren, bei dem ein Gas oder ein Gasgemisch direkt in die Schweißkaveme eingeleitet wird. indem eine Gasdüse in die Schweißkaveme eintaucht. Dabei erfolgt die Gaszufuhr schräg zur Ausrichtung des Lichtbogens und unterhalb des Lichtbogenansatzpunktes der Schweißelektrode. Durch die Gaszufuhr soll der Abbrand von Legierungselementen verringert werden.

Bei einem aus US 3,752,951 bekannten Verfahren zum Schweißen von Aluminiumbronze wird über einen eine Schweißelektrode umgebenden Ringspalt des Schweißbrenners der Schweißstelle ein Schweißpulver zugeführt. Um ein Entstehen giftiger Gase durch chemische Reaktionen beim Aufschmelzen des Schweißpulvers zu verringern bzw. zu verhindern, wird der Schweißstelle über den Ringspalt auch ein Gas zugeführt.

CH 458 887 A beschreibt ein Unterpulverschweißverfahren, welches insbesondere zur horizontalen Unterpulverschweißung an einer vertikalen Wand vorgesehen ist. Da das beim Aufschmelzen des Pulvers entstehende Schutzgas nicht ausreicht, die Wurzellage aufgrund des Luftspalts zwischen den zu verschweißenden Blechen von der Rückseite vor der Atmosphäre zu schützen, wird ein zusätzliches Schutzgas der Schweißstelle zugeführt, das durch den Luftspalt strömt und einen ausreichenden Wurzelschutz an der Rückseite der zu verschweißenden Bleche gewährteistet.

Weitere Weiterentwicklungen des Unterpulver-Schweißverfahrens beschränken sich im Wesentlichen auf den Einsatz neuer Schweißpulver sowie neuer Massiv- und Fülldrahtelektroden.

Vor diesem Hintergrund liegt der vorliegenden Erfindung die Aufgabe zugrunde, ein Unterpulver-Schweißverfahren und eine dafür geeignete Vorrichtung zu entwickeln, bei dem der Schweißprozess so verbessert wird, dass die Energieeinbringung in das Werkstück verbessert wird und die Schweißnahtgeometrie positiv verändert wird.

Diese Aufgabe wird erfindungsgemäß durch ein Unterpulver-Schweißverfahren mit den im Anspruch 1 angegebenen Merkmalen gelöst. Vorteilhafte Weiterbildungen der Erfindung ergeben sich aus den Unteransprüchen, der nachfolgenden Beschreibung und der Zeichnung.

Bei dem erfindungsgemäßen Unterpulver-Schweißverfahren wird eine Schweißelektrode unter einer Schicht Pulver in einem Lichtbogen abgeschmolzen. Dabei wird die Schweißelektrode in Schweißrichtung hinter einer Schweißpulverzufuhr geführt. Durch ein oberhalb des Lichtbogenansatzpunktes der Schweißelektrode zugeführtes Gas wird der Lichtbogen thermisch eingeschnürt. Hierbei verhindert eine Wasserkühlung eine Vorerwärmung des zugeführten Gases.

Das Einschnüren des Lichtbogens durch Gaszufuhr führt zu einer Verringerung des Lichtbogendurchmessers und damit zu einer Verringerung des Lichtbogenquerschnitts. Hierdurch erhöht sich die Leistungsdichte des Lichtbogens soweit, dass sich ein Plasma-Lichtbogen ausbildet. Daraus ergeben sich einige Vorteile, zu denen ein geringerer Einfluss der Schweißparameter auf die Lichtbogenform, ein geringerer Einfluss von Abstandsänderungen zwischen Brenner und Werkstück auf die Einbrandform, ein tiefer Einbrand und eine hohe Schweißgeschwindigkeit gehören. Des Weiteren erweisen sich eine geringe Wärmebeeinflussung des Grundwerkstoffs, die sehr glatte Schweißnahtoberfläche und eine gute Endgasung des hocherhitzten Schmelzbades als vorteilhaft.

Die Lichtbogeneinschnürung wird von außen eingeleitet, in dem ein zusätzliches Gas in die sich unter dem Schweißpulver ausbildende Kaverne eingebracht wird. Im Gegensatz zu der ursprünglichen durch verdampfte Pulverbestandteile und Metalldämpfe hervorgerufene Gasfüllung der Kaverne, weist das von außen zugefügte Gas eine deutlich niedrigere Temperatur auf. Hierdurch kühlt es die Lichtbogenrandzone ab und es kommt zu einer thermischen Kontraktion des Lichtbogens.

Zweckmäßigerweise wird das zusätzliche Gas oberhalb des Lichtbogenansatzpunktes der Schweißelektrode in die Kaverne eingebracht. Auf diese Weise wird sichergestellt, dass die gesamte Lichtbogenrandzone durch das zusätzliche Gas gekühlt wird.

Vorteilhaft liegt der Gasvolumenstrom in einem Bereich von 10 bis 45 l/min, wobei die Ausströmgeschwindigkeit des Gases zwischen 7 und 30 m/s beträgt. Bei diesen Volumenströmen und/oder Ausströmgeschwindigkeiten durchdringt das Gas die Schweißpulveraufschüttung und anschließend die flüssige Schlackeschicht, ohne das Schweißpulver ganz wegzublasen und so den Schweißprozess zu stören. Danach umströmt der Gasstrom die Drahtelektrode und den Lichtbogen, wobei der Gasstrom ausreicht, so viel Wärme aus der Lichtbogenrandzone abzuführen, dass der Lichtbogen thermisch eingeschnürt wird. Ein weiterer positiver Effekt eines Gasstroms mit der oben beschriebenen Dimensionierung zeigt sich bei dessen Auftreten auf die Schmelze des Grundwerkstoffs. Aufgrund seiner kinetischen Energie übt der Schutzgasstrom einen Druck auf das Schmelzbad aus, so dass diese mechanische Beeinflussung der Schmelze den Einbrand zusätzlich fördert.

Bevorzugt sind als zusätzliche Gase aktive Gase vorgesehen. So zeigten Schweißungen mit Kohlendioxid sehr gute Ergebnisse. Verantwortlich hierfür ist die hohe Wärmeleitfähigkeit des CO₂, die den Energieeintrag in das Werkstück zusätzliche verbessert. Letztendlich ist die Gaswahl aber von der Schweißaufgabe, insbesondere von der Art der zu verschweißenden Werkstoffe, abhängig, so dass auch Inertgase sowie Mischgase, bestehend aus inerten und aktiven Gasen, eingesetzt werden können.

Eine Vorrichtung für das erfindungsgemäße Unterpulver-Schweißverfahren weist einen Unterpulver-Schweißbrenner und eine Pulverzufuhr auf, wobei der Schweißbrenner in Schweißrichtung hinter der Schweißpulver-Zufuhr angeordnet ist. Der Brennkopf des Schweißbrenners weist eine Wasserkühlung auf. Daneben sind zweckmäßigerweise Mittel vorgesehen, mit denen zusätzliche Gase in die Schweißstelle eingebracht werden können. Diese Mittel sind zur gezielten Beeinflussung des Lichtbogens und der Werkstückschmelze vorgesehen.

Der Schweißbrenner besitzt hierzu eine zur Schweißelektrode konzentrische Gasdüse. Im Gegensatz zu den Schweißbrennern, die beim konventionellen Unterpulver-Schweißen eingesetzt werden und im Wesentlichen aus einer Elektrodenhalterung mit einer Stromkontaktdüse bestehen, durch die eine abschmelzende Elektrode geführt wird, ist an dem Schweißbrenner für das erfindungsgemäße Unterpulver-Schweißverfahren eine zusätzliche Düse um die Elektrode und die Elektrodenhalterung umhüllend angeordnet. Auf diese Weise ähnelt dieser Schweißbrenner den beim Metallschutzgas-Schweißen eingesetzten Brenner, wobei die Gaszufuhr hauptsächlich zur Fokussierung des Lichtbogens vorgesehen ist, während sie beim Metallschutzgas-Schweißen für den Schutz der Schweißstelle vor der Atmosphäre und zum Ionisieren der Lichtbogenstrecke dient.

Die Austrittsöffnung der Gasdüse ist ringförmig ausgebildet. Dabei wird der Öffnungsring der Düse durch deren Innenwandung und die die Öffnung konzentrisch durchbrechende Schweißelektrode gebildet. Diese Anordnung stellt sicher, dass die Elektrode und damit der an dieser ansetzende Lichtbogen über den gesamten Umfang gleichmäßig von dem Gasstrom umhüllt werden. In einer bevorzugten Ausführungsform des Schweißbrenners weist die Unterkante der Gasdüse einen Abstand von 8 bis 12 mm zur Unterkante der Stromkontaktdüse auf. Der Abstand zwischen der Unterkante der Gasdüse und der Werk-stückoberfläche liegt vorzugsweise in einem Bereich von 15 bis 25 mm. Bei Einsatz eines Unterpulver-Schweißdrahtes mit einem Durchmesser von 4 mm hat sich ein Gasdüseninnendurchmesser von 6 bis 10 mm als besonders vorteilhaft erwiesen. Diese Angaben sind rein exemplarisch. So können die Größen- und Abstandsangaben im Einsatzfall entsprechend optimal angepasst werden.

Bevorzugt weist eine die Außenwandung des Brennerkopfs bildende Verschlusskappe eine Wasserkühlung auf. Diese ist im Allgemeinen erforderlich, da der Kopf des Schweißbrenners und damit die Verschlusskappe so nah an die Schweißstelle geführt werden, dass sie mit der aufgewärmten Schweißpulveraufschüttung in Berührung kommen bzw. in diese eintauchen. Neben dem Schutz des Brennerkopfs verhindert die Wasserkühlung auch, dass das zugeführte Gas schon vor dem Düsenaustritt vorgewärmt wird und so einen Teil seiner den Lichtbogen kontraktierenden Wirkung einbüßt.

Die Erfindung ist nachfolgend anhand von in einer Zeichnung dargestellten Ausführungsbeispielen erläutert. Es zeigen:
- Fig. 1: eine Prinzipskizze des erfindungsgemäßen Unterpulver-Schweißverfahrens und der hierfür vorgesehenen Schweißvorrichtung, in der ein zusätzliches Gas über eine am Schweißbrenner angeordnete Gasdüse zugeführt wird im Schnitt längs zur Schweißnaht,
- Fig. 2: einen Längsschnitt des Brennerkopfes mit einer Gasdüse, der bei dem erfindungsgemäßen Schweißverfahren eingesetzt wird und

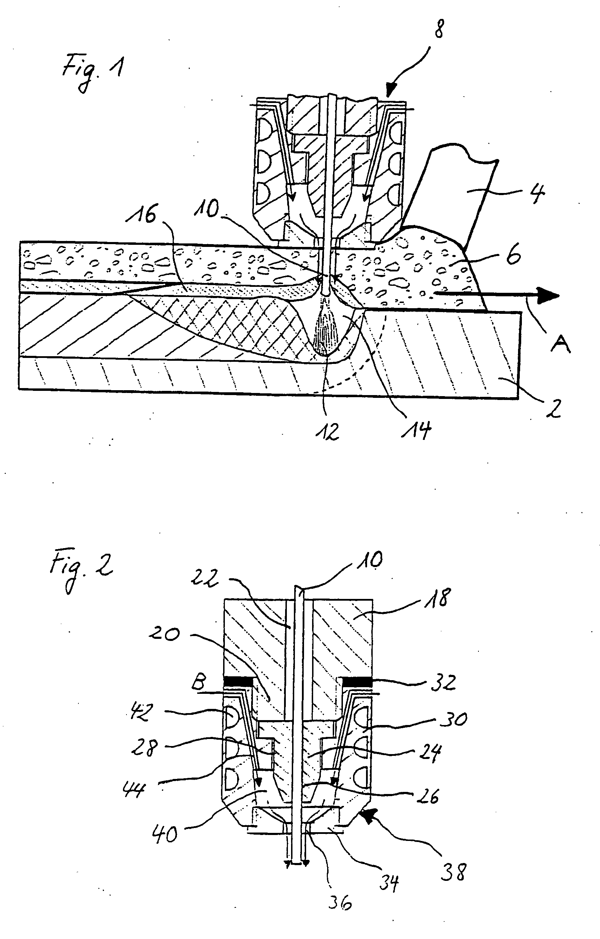

Fig. 1 zeigt ein Werkstück 2, auf dem eine Schweißpulverzufuhr 4 eine Schicht Schweißpulver 6 aufgeschüttet hat. Bei der Schweißpulverzufuhr 4 handelt es sich um eine Pulverzuführung, wie sie beim Unterpulver-Schweißen an sich bekannt ist und wird in der Zeichnung nur durch den Endbereich des Zufuhrrohres dargestellt.

In Schweißrichtung A hinter der Schweißpulverzufuhr 4 ist ein Unterpulver-Schweißbrenner 8 angeordnet. Zwischen dessen abschmelzender Elektrode 10 und dem Werkstück 2 brennt ein Lichtbogen 12 und bildet eine aus verdampften Pulverbestandteilen und Metalldämpfen der Schmelze gebildete gasgefüllte Schweißkaverne 14. Die Schweißkaverne 14 wird pulverseitig durch eine Schicht flüssiger Schlacke 16, die sich aus erschmolzenen Pulverbestandteilen gebildet hat, begrenzt. Diese Schlackeschicht 16 wird zusammen mit dem darüber aufgehäuften Schweißpulver 6 von der Elektrode 10 durchstoßen.

In Fig. 2 ist ein Brennerkopf des Unterpulver-Schweißbrenners 8 im Einzelnen dargestellt. Dieser weist eine Elektrodenhalterung 18 zum Führen der Elektrode 10 auf. Die Elektrodenhalterung 18 ist absatzförmig ausgebildet und verjüngt sich schweißseitig zu einen Absatz 20. In Längsrichtung ist die Elektrodenhalterung 18 durch einen Kanal 22 zentral durchbrochen.

An den Absatz 20 der Elektrodenhalterung 18 schließt sich schweißseitig eine Stromkontaktdüse 24 an. Diese besitzt schweißseitig einen Absatz 28, über den sie sich radial verjüngt. Diese Verjüngung wird im Bereich des schweißseitigen Endes der Stromkontaktdüse 24 durch ein konisches Zulaufen weiter fortgesetzt. Auch die Stromkontaktdüse 24 weist in Längsrichtung eine Durchbrechung 26 auf.

Durch den Kanal 22 der Elektrodenhalterung 18 und die Durchbrechung 26 der Stromkontaktdüse 24 wird die Elektrode 10 der Schweißstelle zugeführt. Dabei sind die Abmessungen der Durchbrechung 26 so gestaltet, dass die Elektrode 10 zum Anlegen der Schweißspannung leitend an der Innenwand der Durchbrechung 26 anliegt.

Die Elektrodenhalterung 18 wird in Richtung der Schweißstelle durch einen hohlen, beidseitig offenen Rotationskörper 30 verlängert. Dabei ist der Kontaktbereich zwischen der Elektrodenhalterung 18 und dem Rotationskörper 30 durch einen Axialdichtring 32 abgedichtet. Schweißseitig ist die Öffnung des Rotationskörpers 30 mit einer Gasdüse 34 abgeschlossen. Die Gasdüse 34 weist eine zentrale Durchbrechung 36 auf, durch die die schweißseitige Öffnung des Rotationskörpers 30 eingeengt wird. Der Rotationskörper 30 und die Gasdüse 34 bilden die Verschlusskappe 38.

In den Hohlraum des Rotationskörpers 30 ragt ein Teil des Absatzes 20 der Elektrodenhalterung 18 sowie die Stromkontaktdüse 24 hinein, wobei die Innenwandung des Rotationskörpers 30 so profiliert ist, dass eine Öffnung entsteht, deren Form komplementär zur Außenform des Absatzes 20 der Elektrodenhalterung 18 und zur Außenform der Stromkontaktdüse 24 ist. Diese wird von dem Absatz 20 und der Stromkontaktdüse 24 teils bündig und teils mit geringem Spiel durchbrochen. Im Bereich der konischen Spitze der Stromkontaktdüse 24 erweitert sich die Öffnung und bildet den schweißseitig durch die Gasdüse 34 abgeschlossenen Raum 40. Durch den Raum 40 und die Durchbrechung 36 der Gasdüse 34 wird die abschmelzende Schweißelektrode 10 der Schweißstelle zugeführt.

Im Inneren seiner Außenwandung besitzt der Rotationskörper 30 Kanäle 42 für eine Wasserkühlung. Diese ist in der Fig. 2 durch drei Kühlkanäle 42 dargestellt, die den Rotationskörper 30 nahe dessen Außenwand umfänglich umlaufen.

Des Weiteren sind an dem Rotationskörper 30 Zuführkanäle 44 zum Einleiten eines Gasstroms B vorgesehen. Diese verlaufen von der Außenwand des Rotationskörpers 30 nahe dem Dichtring 32 zunächst radial nach innen und dann schräg nach innen und zur Schweißstelle durch den Rotationskörper 30 in den Raum 40. Das durch die Zuführkanäle 44 eingeleitete Gas verlässt den Raum 40 durch einen Ringspalt, der von der Durchbrechung 36 der Gasdüse 34 und der Elektrode 10 gebildet wird, entlang der Elektrode 10.

Wie der Fig. 1 zu entnehmen ist, durchdringt das Gas das Schweißpulver 6 und die anschließende Schlackeschicht 16 und gelangt in die Schweißkaverne 14, wo es den Lichtbogen 12 einschnürt und die Werkstoffschmelze mechanisch beeinflußt.

### Bezugszeichenliste

- 2: Werkstück
- 4: Schweißpulverzufuhr
- 6: Schweißpulver
- 8: Unterpulver-Schweißbrenner
- 10: Elektrode
- 12: Lichtbogen
- 14: Schweißkaverne
- 16: Schlackeschicht
- 18: Elektrodenhalterung
- 20: Absatz
- 22: Kanal
- 24: Stromkontaktdüse
- 26: Durchbrechung
- 28: Absatz
- 30: Rotationskörper
- 32: Dichtring
- 34: Gasdüse
- 36: Durchbrechung
- 38: Verschlusskappe
- 40: Raum
- 42: Kanäle für die Wasserkühlung
- 44: Zuführkanäle

- A: Schweißrichtung
- B: Gasstrom
- C: Gasstrom

## Patentansprüche

1. Unterpulver-Schweißverfahren bei dem unter einer Schicht Schweißpulver (6) in einem Lichtbogen (12) eine Schweißelektrode (10) abgeschmolzen wird, wobei die Schweißelektrode in Schweißrichtung hinter einer Schweißpulverzufuhr geführt wird, **dadurch gekennzeichnet, dass** der Lichtbogen (12) durch ein oberhalb des Lichtbogenansatzpunktes der Schweißelektrode zugeführtes Gas thermisch eingeschnürt wird, wobei eine Wasserkühlung in einem verwendeten Schweißbrennerkopf eine Vorerwärmung des zugeführten Gases verhindert.

2. Unterpulver-Schweißverfahren nach Anspruch 1, **dadurch gekennzeichnet, dass** das Gas in eine sich unter dem Schweißpulver (6) ausbildende Kaverne (14) eingebracht wird.

3. Unterpulver-Schweißverfahren nach Anspruch 1, **dadurch gekennzeichnet, dass** der Gasvolumenstrom (B) in einem Bereich von 10 bis 45 l/mim liegt.

4. Unterpulver-Schweißverfahren nach Anspruch 3, **dadurch gekennzeichnet, dass** die Ausströmgeschwindigkeit des Gases in einem Bereich von 7 bis 30 m/s liegt.

5. Unterpulver-Schweißverfahren noch einem der vorangehenden Ansprüche, **dadurch gekennzeichnet, dass** als Gas ein aktives Schutzgas eingesetzt wird.

6. Vorrichtung zum Unterpulver-Schweißen nach einem Verfahren nach einem der Ansprüche 1 bis 5, mit einem Unterpulver-Schweißbrenner und mit einer Pulverzufuhr, wobei der Schweißbrenner in Schweißrichtung hinter der Schweißpulverzufuhr angeordnet ist, **dadurch gekennzeichnet, dass** Mittel zum gezielten Beeinflussen des Lichtbogens und der Werkstückschmelze in Form einer Gaszuführung (38, 48) oberhalb des Lichtbogenansatzpunktes der Schweißelektrode und einer Wasserkühlung des Brennerkopfes vorgesehen sind und dass der Schweißbrenner (8) eine zur Schweißelektrode (10) konzentrische Gasdüse (34) mit einer kreisrinförmigen Austrittsöffnung aufweist, wobei ein Öffnungsring der Gasdüse (34) durch deren Innenwandung und die die Austrittsöffnung der Gasdüse (34) konzentrisch durchbrechenden Schweißelektrode (10) gebildet wird.

7. Vorrichtung noch Anspruch 6 **dadurch gekennzeichnet, dass** eine die Außenwandung des Brennerkopfs bildende Verschlusskappe (38) eine Wasserkühlung (42) aufweist.

## Claims

1. A submerged arc welding method, with which a welding electrode (10) is melted down below a layer of welding flux (6) in an arc (12), wherein the welding electrode is led behind a feed of welding flux in the welding direction, **characterised in that** the arc (12) is thermally constricted by way of a gas fed above the arc generation point of the welding electrode, wherein a water cooling in an applied welding torch head prevents a preheating of the fed gas.

2. A submerged arc welding method according to claim 1, **characterised in that** the gas is introduced into a cavity (14) forming below the welding flux (6).

3. A submerged arc welding method according to claim 1, **characterised in that** the gas volume flow (B) lies in a region of 10 to 45 l/min.

4. A submerged arc welding method according to claim 3, **characterised in that** the outflow speed of the gas lies in a region of 7 to 30 m/s.

5. A submerged arc welding method according to one of the preceding claims, **characterised in that** an active shielding gas is applied as a gas.

6. A device for the submerged arc welding according to a method according to one of the claims 1 to 5, with a submerged arc welding torch and with a flux feed, wherein the welding torch is arranged behind the welding flux feed in the welding direction, **characterised in that** the means for the targeted influencing of the arc and of the work-piece melt are provided in the form of a gas feed (38, 48) above the arc generation point of the welding electrode, and of a water cooling of the torch head, and that the welding torch (8) comprises a gas nozzle (34) with an annulus shaped exit opening, said nozzle being concentric to the welding electrode (10), wherein an opening ring of the gas nozzle (34) is formed by way of its inner wall and the welding electrode (10) which concentrically breaks through the exit opening of the gas nozzle (10).

7. A device according to claim 6, **characterised in that** a closure cap (38) forming the outer wall of the torch head has a water cooling (42).

## Revendications

1. Procédé de soudage à l'arc submergé, dans lequel s'opère la fusion d'une électrode de soudage (10) sous une couche de flux en poudre (6) à l'aide d'un arc électrique (12), l'électrode de soudage étant guidée dans la direction de soudage derrière une entrée du flux en poudre, **caractérisé en ce que** l'arc électrique (12) est contracté thermiquement par un gaz amené au-dessus du point de départ de l'arc électrique de l'électrode de soudage, un refroidissement par eau dans une tête de chalumeau de soudage utilisée empêchant un préchauffage du gaz acheminé.

2. Procédé de soudage à l'arc submergé selon la revendication 1, **caractérisé en ce que** le gaz est introduit dans une caverne (14) se formant sous le flux en poudre (6).

3. Procédé de soudage à l'arc submergé selon la revendication 1, **caractérisé en ce que** le débit volumique de gaz (B) est compris entre 10 et 45 l/min.

4. Procédé de soudage à l'arc submergé selon la revendication 3, **caractérisé en ce que** la vitesse d'écoulement du gaz se situe dans une plage de 7 à 30 m/s.

5. Procédé de soudage à l'arc submergé selon l'une des revendications précédentes, **caractérisé en ce que** le gaz utilisé est un gaz de protection actif.

6. Dispositif pour le soudage à l'arc submergé selon un procédé selon l'une des revendications 1 à 5, comprenant un chalumeau de soudage sous flux en poudre et une alimentation en poudre, dans lequel le chalumeau de soudage est disposé dans la direction de soudage derrière l'entrée du flux en poudre, **caractérisé en ce que** sont prévus des moyens pour influer de manière ciblée sur l'arc électrique et le bain de fusion de la pièce à travailler sous forme d'une alimentation en gaz (38, 48), située au-dessus du point de départ de l'arc électrique de l'électrode de soudage, et d'un refroidissement par eau de la tête du chalumeau, et **en ce que** le chalumeau (8) comporte une buse à gaz (34) concentrique à l'électrode de soudage (10), pourvue d'une ouverture de sortie circulaire, une bague d'ouverture de la buse à gaz (34) étant formée par la paroi intérieure de celle-ci et par l'électrode de soudage (10) pénétrant concentriquement à travers l'ouverture de sortie de la buse à gaz (34).

7. Dispositif selon la revendication 6, **caractérisé en ce qu'**un capuchon de fermeture (38) formant la paroi extérieure de la tête du chalumeau est pourvu d'un refroidissement par eau (42).
